# EUROPEAN PATENT APPLICATION

(11) **EP 3 401 864 A1**
(43) Date of publication of application: **14.11.2018**
(21) Application number: 16899878.9
(22) Date of filing: 29.04.2016
(51) Int. Cl.: G06Q 20/32, G06Q 20/38

(54) **METHOD FOR SELECTING TRANSACTION APPLICATION, AND TERMINAL**

(71) Applicant: Huawei Technologies Co., Ltd., Longgang District Shenzhen, Guangdong 518129 (CN)
(72) Inventor: MEI, Jingqing, Shenzhen Guangdong 518129 (CN); ZHAO, Xiaona, Shenzhen Guangdong 518129 (CN); CHANG, Xinmiao, Shenzhen Guangdong 518129 (CN)
(74) Representative: Maiwald Patent- und Rechtsanwaltsgesellschaft mbH
(86) International application number: PCT/CN2016/080801
(87) International publication number: WO 2017/185367

(57) **Abstract**

A transaction application selection method and a terminal are disclosed. The method includes: establishing, by a first terminal, an NFC connection to a transaction peer end; receiving, by the first terminal by using the NFC connection, a first message sent by the transaction peer end, where the first message includes at least one information record of the transaction peer end, and the information record includes account data and an account type; and determining, by the first terminal based on the account type included in the at least one information record, a first information record from the at least one information record, and determining to use a first payment application to perform transaction processing based on account data in the first information record, where the first payment application is a payment application on the first terminal. In this way, the first terminal can determine, based on the first message that is provided by the transaction peer end for transaction, the first information record and the first payment application of the first terminal for transaction, so as to improve transaction processing efficiency.

## Description

### TECHNICAL FIELD

The present invention relates to the field of payment technologies, and in particular, to a transaction application selection method and a terminal.

### BACKGROUND

With rapid development of electronic technologies, a conventional financial transaction is gradually replaced by an electronic transaction. Various payment tools that support an online transaction function are installed on a user terminal, and therefore, an online transaction can be implemented based on various account types such as a bank account, a payment application account, and a uniform resource locator (Uniform Resource Locator, URL) account.

Existing online transaction payment manners generally include:
(1) A charge payer and a charge receiver determine to use a same payment application. The charge receiver notifies the charge payer of a charge receiver account in a manner such as a verbal agreement or sending a message. The charge payer starts the payment application, and enters the foregoing charge receiver account and other necessary information such as a transaction amount. After identity verification is passed, the payment application submits a transaction request to a corresponding financial server to complete a transaction.
(2) The charge receiver and the charge payer determine to use and start a same payment application. One of the charge receiver and the charge payer uses the payment application to generate a two-dimensional code or send an ultrasonic wave, and correspondingly, the other uses the payment application to scan the two-dimensional code or receive the ultrasonic wave, so as to obtain an account of the other party, and send a transaction request to a corresponding financial server to complete a transaction. In this manner, based on a specific scenario, the charge payer or the charge receiver may generate the two-dimensional code; and in addition, the charge payer or the charge receiver may provide a transaction amount.
(3) The charge receiver sends a URL to the charge payer in a manner such as a verbal description or sending a message. The charge payer uses a web browser to display the URL bar, and enters information such as payment information in the URL bar to log in to a payment application account of the charge payer for charge payment.

It may be learned that in existing online transaction payment manners, a needed payment application cannot be automatically determined in a scenario without a human negotiation. The charge receiver and the charge payer need to determine a transaction payment manner and a payment application to be used before a transaction. This is time-consuming and effort-consuming, and consequently, causes low transaction processing efficiency.

### SUMMARY

Embodiments of the present invention provide a transaction application selection method and a terminal, so that the terminal can quickly determine a payment application in an online transaction, to improve transaction processing efficiency.

According to a first aspect, a transaction application selection method is provided, including:
establishing, by a first terminal, an NFC connection to a transaction peer end;
receiving, by the first terminal by using the NFC connection, a first message sent by the transaction peer end, where the first message includes at least one information record of the transaction peer end, and the information record includes account data and an account type; and
determining, by the first terminal based on the account type included in the at least one information record, a first information record from the at least one information record, and determining to use a first payment application to perform transaction processing based on account data in the first information record, where the first payment application is a payment application on the first terminal.

In this implementation, the first terminal obtains, in the NFC connection manner, the at least one information record that is provided by the transaction peer end and that includes the account data and the account type. This avoids a disadvantage of the prior art that key information is stolen when an information record for transaction is manually obtained, and improves transaction security. Human intervention is not needed in a process of determining the first information record and the first payment application for transaction. This avoids a prior-art problem that a transaction payment application needs to be negotiated and determined by humans before a transaction, which is time-consuming and effort-consuming, and causes a complicated transaction process, and improves transaction processing efficiency.

Further, the account type is a bank account type, a payment application account type, or a URL account type.

In this implementation, the terminal is compatible with online transactions of a plurality of account types, and extends a transaction application scope.

In a possible implementation, when the account type is the bank account type, the corresponding account data is a bank account.

In a possible implementation, when the account type is the payment application account type, the information record further includes a payment application identifier, and the account data is a payment application account corresponding to the payment application identifier.

In a possible implementation, when the account type is the URL account type, the account data is a URL address.

In a possible implementation, the determining, by the first terminal based on the account type included in the at least one information record, a first information record from the at least one information record, and determining to use a first payment application to perform transaction processing based on account data in the first information record may be implemented by performing the following procedure:
selecting, by the first terminal, an information record from the at least one information record; and determining, by the first terminal, that at least one candidate payment application supports use of an account type in the selected information record for transaction, and determining, by the first terminal, the first payment application from the at least one candidate payment application according to a preset payment application selection rule or a received user selection, and using the selected information record as the first information record.

In a possible implementation, the determining, by the first terminal, the first payment application from the at least one candidate payment application according to a preset payment application selection rule may be implemented in the following manner:
obtaining, by the first terminal, any one of a transaction amount, a transaction time, and a transaction place; and
selecting, by the first terminal, the first payment application when the transaction amount is within a first amount range, where the first payment application is a candidate payment application corresponding to the first amount range; or
selecting, by the first terminal, the first payment application when the transaction time is within a first time range, where the first payment application is a candidate payment application corresponding to the first time range; or
selecting, by the first terminal, the first payment application when the transaction place is within a first place range, where the first payment application is a candidate payment application corresponding to the first place range.

In this implementation, the terminal determines the first payment application according to the preset application selection rule. This greatly improves determination efficiency of the first payment application, and the obtained first payment application better meets a user transaction requirement, and improves user experience.

In a possible implementation, the determining, by the first terminal, that at least one candidate payment application supports use of an account type in the selected information record for transaction may include the following three cases:
Case 1: When the first terminal determines that the account type in the selected information record is a bank account type, at least one payment application that is of the first terminal and that supports use of the bank account type for transaction is obtained and used as the at least one candidate payment application.
Case 2: When the first terminal determines that the account type in the selected information record is a payment application account type, the payment application identifier in the selected information record is obtained, and a payment application that is on the first terminal and that is corresponding to the payment application identifier is used as the at least one candidate payment application.
Case 3: When the first terminal determines that the account type in the selected information record is a URL account, at least one browser on the first terminal is used as the at least one candidate payment application.

In a possible implementation, the determining, by the first terminal, to use a first payment application to perform transaction processing based on account data in the first information record specifically includes: sending, by the first terminal, a transaction message to a server, so that the server performs transaction settlement processing based on the transaction message, where the transaction message includes second account data, first account data, and a transaction amount, the first account data is the account data in the first information record, and the second account data is account data corresponding to the first payment application.

In a possible implementation, the first account data is a charge payment account, and the second account data is a charge receiving account. For example, the first terminal is a terminal used by a charge receiving user, and the transaction peer end is a terminal used by a charge payment user.

In a possible implementation, the first account data is a charge receiving account, and the second account data is a charge payment account. For example, the first terminal is a terminal used by a charge receiving user, and the transaction peer end is a terminal used by a charge payment user.

In a possible implementation, the first terminal obtains the transaction amount from the first message; or the first terminal receives a transaction amount entered by the user.

According to a second aspect, a transaction application selection method is provided, including:
establishing, by a transaction peer end, an NFC connection to a first terminal;
obtaining, by the transaction peer end, a first message, where the first message includes at least one information record of the transaction peer end, and the information record includes account data and an account type; and
sending, by the transaction peer end, the first message to the first terminal by using the NFC connection, so that the first terminal selects a payment application based on the first message.

In a possible implementation, the information record further includes a transaction amount.

According to a third aspect, a terminal is provided, and the terminal has a function of implementing actions of the first terminal in the foregoing method. The function may be implemented by hardware, or may be implemented by hardware by executing corresponding software.

In an optional implementation solution, a structure of the terminal includes an NFC module, a processor, and a memory.

The NFC module is configured to: support the terminal in establishing an NFC connection to a peer end device, and receive, by using the NFC connection, a first message sent by the peer end device, where the first message includes at least one information record of the peer end device, and the information record includes account data and an account type.

The processor is configured to support the terminal in performing a corresponding function in the foregoing method, specifically including: determining, based on the account type included in the at least one information record in the first message, a first information record from the at least one information record, and determining to use a first payment application to perform transaction processing based on account data in the first information record, where the first payment application is a payment application on the terminal.

The terminal may further include a memory, where the memory is configured to couple to the processor and stores necessary program instructions and data of the terminal.

According to a fourth aspect, a terminal is provided, and the terminal has a function of implementing actions of the transaction peer end in the foregoing method. The function may be implemented by hardware, or may be implemented by hardware by executing corresponding software.

In an optional implementation solution, a structure of the terminal includes an NFC module, a processor, and a memory.

The processor is configured to support the terminal in performing a corresponding function in the foregoing method, specifically including: generating a first message, where the first message includes at least one information record of the terminal, and the information record includes account data and an account type.

The NFC module is configured to: support the terminal in establishing an NFC connection to a peer end device, and send a first message to the peer end device by using the NFC connection, so that the peer end device selects a payment application based on the first message.

The terminal may further include a memory, where the memory is configured to couple to the processor and stores necessary program instructions and data of the terminal.

According to a fifth aspect, this application provides a computer storage medium, configured to store a computer software instruction that is used by the first terminal in the foregoing first aspect and second aspect, where the computer software instruction includes a program designed to perform the foregoing aspects.

According to a sixth aspect, this application provides a computer storage medium, configured to store a computer software instruction that is used by the transaction peer end in the foregoing first aspect and second aspect, where the computer software instruction includes a program designed to perform the foregoing aspects.

According to the foregoing solution, in the embodiments of the present invention, the terminal receives, by using an NFC connection in an online transaction, a first message that is provided by another terminal and that includes account data and an account type, and quickly and efficiently determines, based on the first message, a first payment application used for transaction, thereby improving transaction processing efficiency.

### BRIEF DESCRIPTION OF DRAWINGS

FIG. 1 is a schematic structural diagram of a terminal according to an embodiment of the present invention;
FIG. 2A is a schematic diagram of a message body format of a first message according to an embodiment of the present invention;
FIG. 2B, FIG. 2C, and FIG. 2D are schematic diagrams of a message body format of an information record according to an embodiment of the present invention;
FIG. 3 is a flowchart of a transaction application selection method in Scenario 1 according to an embodiment of the present invention;
FIG. 4 is a flowchart of a transaction application selection method in Scenario 2 according to an embodiment of the present invention; and
FIG. 5 is a flowchart of a transaction application selection method in Scenario 3 according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention.

The embodiments of the present invention provide a transaction application selection method and a terminal, so that the terminal can quickly determine a payment application in an online transaction, to improve transaction processing efficiency. The method and the apparatus are conceived based on a same invention. The method and the apparatus have similar principles for resolving the problems. Therefore, for implementation of the apparatus and the method, reference may be made to each other, and repeated descriptions are not provided again.

To make this application understood more easily, the following provides explanations on some common descriptions in the embodiments of this application. It should be noted that the explanations are not considered as a limitation on the protection scope of this application.

### I. Terminal, first terminal, and transaction peer end

In the embodiments of this application, a terminal may be a device that provides a user with voice connectivity and/or data connectivity, a handheld device that has a wireless connection function, or another processing device connected to a wireless modem such as a mobile phone (also referred to as a "cellular" phone), or may be a portable, pocket-sized, or handheld device, a wearable device (such as a smartwatch or a smart band), a tablet computer, a personal computer (PC, Personal Computer), a PDA (Personal Digital Assistant, personal digital assistant), a POS (Point of Sales, point of sale), an in-vehicle computer, or the like.

In the embodiments of the present invention, a first terminal and a transaction peer end communicate with each other, and applicable communications standards include but are not limited to various near field communications standards such as Bluetooth, Near Field Communication (Near Field Communication, NFC), ZigBee, infrared data transmission (Infrared Data Association, IrDA), and Wireless Fidelity (Wireless Fidelity, WiFi). Alternatively, in a future evolved 5^{th} Generation (5^{th} Generation, 5G) mobile communications system, the first terminal and the transaction peer end may communicate with each other in a device-to-device (Device to Device, D2D) manner that is based on a cellular network for communication. Any standard may be used provided that communication between the two terminals can be implemented.

The NFC is a wireless connection technology in which magnetic field induction is used to implement communication between electronic devices in a short distance. An operating frequency of the NFC is 13.56 MHz, an effective communication range of the NFC is 0-20 cm, and a typical value of the effective communication range is 4 cm. Two NFC terminals (that is, terminals with an NFC function, for example, an NFC mobile phone) may implement quick and secure data exchange by contacting or approaching each other.

The NFC terminal has three operating modes (based on a role that the NFC terminal plays in NFC communication): a card emulation (CE, Card Emulation) mode, a read/write (R/W, Reader/Writer) mode, and a peer-to-peer (P2P, Peer-to-Peer) mode.

CE mode: A device with the NFC function is simulated into a contactless card or an NFC tag (Tag), which is used in a mobile payment scenario or an identity authentication scenario such as a bank card, a transportation card, a membership card, a coupon, or an identification card. In this mode, a mobile device can be used as a card even if it runs out of power or is switched off.

R/W mode: A mobile phone with the NFC function plays a role of a card reader, and can read data from an NFC tag or a card. The R/W mode is used in a mobile payment scenario or an identity authentication scenario such as a bank card POS machine or a transportation POS machine, and a tag reader/writer scenario.

P2P mode: Two terminals with the NFC function may establish a peer-to-peer communication link between each other, and perform data exchange. The P2P mode is used in a scenario such as contact card sharing, web page sharing, NFC pairing Bluetooth, and WiFi.

In the embodiments of the present invention, an NFC connection established between the first terminal and the transaction peer end may be based on that the first terminal and the transaction peer end operate in the P2P mode, or one of the two terminals operates in the R/W mode, and the other terminal operates in the CE mode.

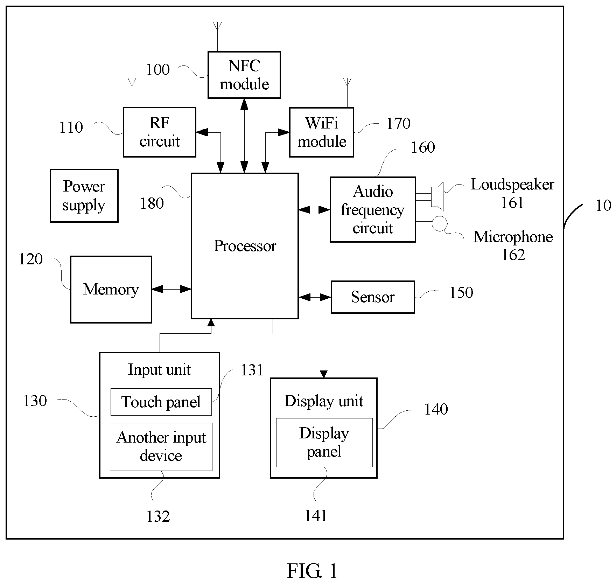

FIG. 1 is an optional schematic structural diagram of hardware of a terminal 10.

As shown in FIG. 1, the terminal 10 includes parts such as an NFC module 100, a radio frequency (Radio Frequency, RF) circuit 110, a memory 120, an input unit 130, a display unit 140, a sensor 150, an audio frequency circuit 160, a Wireless Fidelity (wireless fidelity, WiFi) module 170, a processor 180, and a power supply 190. A person skilled in the art may understand that the structure of the terminal shown in FIG. 1 does not constitute a limitation on the terminal, parts more or less than those shown in FIG. 1 may be included, some parts may be combined, or the parts may be arranged in a different way.

NFC is a short-distance wireless communications technology. The terminal 10 provides a user with an NFC communication capability by using the NFC module 100, and may perform near field communication with another terminal with an NFC function. In this embodiment of the present invention, the NFC module 100 forwards received data to the processor 180 for processing.

The RF circuit 110 or the WiFi module 170 receives and transmits a radio signal. The terminal 10 may access a server or another terminal by using the RF circuit 110 or the WiFi module 170, to obtain data on the server or the another terminal; for example, the terminal 10 accesses a financial server of a transaction application on the Internet for payment authorization.

Specifically, when a signal is received or sent between the RF circuit 110 and a base station, downlink information of the base station is received and then sent to the processor 180 for processing. In addition, designed uplink data is sent to the base station. Generally, the RF circuit includes but is not limited to an antenna, at least one amplifier, a transceiver, a coupler, an LNA (Low Noise Amplifier, low noise amplifier), a duplexer, and the like. In addition, the RF circuit 110 may communicate with a network and another device through wireless communication. The wireless communication may use any communications standard or protocol, which includes but is not limited to a Global System for Mobile Communications (Global System of Mobile communication, GSM), a general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, and a short message service (Short Messaging Service, SMS).

WiFi is a short-distance wireless transmission technology. When receiving or transmitting a signal, the WiFi module 170 may use a WiFi communications standard in the 802.11 protocol series. The terminal 10 provides the user with wireless broadband Internet access by using the WiFi module 170. Although FIG. 1 shows the WiFi module 170, it may be understood that the WiFi module 170 is not a mandatory part of the terminal 10, and may be omitted based on a requirement without changing the essence of the present invention. In the present invention, the terminal 10 may communicate with the financial server of the transaction application by using the RF circuit 110 and the WiFi module 170, and particularly, sends a transaction processing request to a transaction application server, so that the transaction application server completes processing of the transaction.

The memory 120 may be configured to store a software program and a module, including a payment application selection module and a program of each payment application in this embodiment of the present invention. The processor 180 performs a payment application selection function and a transaction processing function of the terminal 10 by running the software program and the module stored in the memory 120. The memory 120 may mainly include a program storage area and a data storage area. The program storage area may store an operating system, a program of at least one payment application, an application program required by at least one function (such as a voice playing function and an image playing function), and the like. The data storage area may store data created based on use of the terminal 10, including related setting information or service condition information of the transaction application in this embodiment of the present invention. In addition, the memory 120 may include a high-speed random access memory, and may further include a non-volatile memory, such as at least one magnetic disk storage device, a flash memory device, or another volatile solid-state storage device.

The input unit 130 may be configured to receive entered digit or character information, and generate a key signal input related to a user setting and function control of the terminal 10, including an operation of determining a payment application for transaction or selecting a payment application for transaction by the user in this embodiment of the present invention. Specifically, the input unit 130 may include a touch panel 131 and another input device 132. The touch panel 131, also referred to as a touchscreen, can collect a touch operation (for example, an operation performed by the user on or near the touch panel 131 by using any appropriate object or accessory such as a finger or a stylus) of the user on or near the touch panel 131, and drive a corresponding connection apparatus based on a preset program. Optionally, the touch panel 131 may include two parts: a touch detection apparatus and a touch controller. The touch detection apparatus detects a touch direction of the user, detects a signal brought by the touch operation, and transmits the signal to the touch controller. The touch controller receives touch information from the touch detection apparatus, converts the touch information into touch point coordinates, then sends the touch point coordinates to the processor 180, and can receive and perform a command sent by the processor 180. In addition, the touch panel 131 may be implemented by using a plurality of types, such as a resistive type, a capacitive type, an infrared ray, and a surface acoustic wave. In addition to the touch panel 131, the input unit 130 may include the another input device 132. Specifically, the another input device 132 may include but is not limited to one or more of a physical keyboard, a function key (for example, a volume control key or an on/off key), a trackball, a mouse, and a joystick.

The display unit 140 may be configured to display information entered by the user, information that is provided for the user, and various menus of the terminal 10, including information used to request the user to determine a payment application or information used by the user to request to select one payment application in at least one candidate payment application in this embodiment of the present invention. The display unit 140 may include a display panel 141. Optionally, the display panel 141 may be configured in the form of an LCD (Liquid Crystal Display, liquid crystal display), an OLED (Organic Light-Emitting Diode, organic light-emitting diode), and the like. Further, the touch panel 131 may cover the display panel 141. When detecting a touch operation on or near the touch panel 131, the touch panel 131 transfers the touch operation to the processor 180 to determine a type of a touch event, and then the processor 180 provides a corresponding visual output on the display panel 141 based on the type of the touch event. Although the touch panel 131 and the display panel 141 in FIG. 1 are used as two independent parts to implement input and input functions of the terminal 10, in some embodiments, the touch panel 131 and the display panel 141 may be integrated to implement the input and output functions of the terminal 10.

The terminal 10 may further include at least one type of sensor 150 such as a GNSS sensor (for example, a GPS sensor), a light sensor, a motion sensor, and another sensor. Specifically, the GNSS sensor, for example, the GPS sensor, may be configured to determine a location of the terminal 10, may be configured for a transaction scenario in the present invention, and is further configured to determine a payment application to be used. The light sensor may include an ambient light sensor and a proximity sensor. The ambient light sensor may adjust brightness of the display panel 141 based on ambient light, and the proximity sensor may close the display panel 141 and/or backlight when the terminal 10 approaches an ear. As a type of motion sensor, the acceleration sensor can detect a value of an acceleration in each direction (generally three axes), and detect a value and a direction of gravity when the acceleration sensor is static, and is applicable to an application for recognizing a terminal posture (for example, switching between a landscape screen and a portrait screen, relevant games, and magnetometer posture calibration), a function related to vibration recognition (such as a pedometer or a knock), and the like. Other sensors such as a gyroscope, a barometer, a hygrometer, a thermometer, and an infrared sensor may also be disposed on the terminal 10. Details are not described herein.

An audio frequency circuit 160, a loudspeaker 161, and a microphone 162 may provide audio interfaces between the user and the terminal 10. The audio frequency circuit 160 may transmit, to the loudspeaker 161, a received electrical signal that is obtained after conversion of audio data; and the loudspeaker 161 converts the electrical signal to a sound signal for output. In addition, the microphone 162 converts a collected sound signal to an electrical signal; the audio frequency circuit 160 receives the electrical signal, converts the electrical signal to audio data, and then outputs the audio data to an RF circuit 108; and then the RF circuit 108 sends the audio data to, for example, another terminal, or outputs the audio data to the memory 120 for further processing.

As a control center of the terminal 10, the processor 180 connects all parts of the terminal by using various interfaces and lines, and performs various functions of the terminal 10 and processes data by running or performing the software program and/or the module stored in the memory 120 and invoking data stored in the memory 120, so as to perform overall monitoring on the terminal. In this embodiment of the present invention, the processor 180 is configured to: receive and parse a first message from the transaction peer end to obtain an information record in the first message; select a payment application based on the information record; and perform transaction processing by running the selected payment application. Optionally, the processor 180 may include one or more processing units. Optionally, an application processor and a modem processor may be integrated into the processor 180, where the application processor mainly processes an operating system, a user interface, an application program, and the like, and the modem processor mainly processes radio communication. It may be understood that the foregoing modem processor may not be integrated into the processor 180.

The terminal 10 further includes a power supply, such as a battery, that supplies power to each component. Optionally, the power supply may be logically connected to the processor 180 by using a power supply management system. In this way, functions such as management of charging, discharging, and power consumption are implemented by using the power supply management system.

Although not shown in the figure, the terminal 10 may further include a camera, a Bluetooth module, and the like. Details are not described herein.

In this embodiment of the present invention, the first terminal may be the terminal 10 shown in FIG. 1, and the transaction peer end may be the terminal 10 shown in FIG. 1, or may be an NFC tag.

The NFC tag is compatible with one or more standards in the NFC Forum Type 1, the NFC Forum Type 2, the NFC Forum Type 3, the NFC Forum Type 4, the MIFARE Classical Tag Standards, the ISO/IEC14443, and the Japanese Industrial Standards (JIS) X6419-4.

The NFC tag includes a processor, a memory, a transceiver circuit, and an antenna, where the processor is configured to process various instructions, the memory is configured to store data, and the transceiver is configured to: modulate all or some of the data stored in the memory into RF signals of 13.56 MHz, and send the RF signals to the terminal by using the antenna.

It should be noted that in this embodiment of the present invention, when the transaction peer end is the NFC tag, before the first terminal obtains the first message sent by the NFC tag: the first terminal establishes an NFC connection to the NFC tag, and sends a readable instruction to the NFC tag, so as to instruct the NFC tag to send the first message to the first terminal. For the method in which the first terminal establishes the NFC connection to the NFC tag, and the first terminal sends the readable instruction to the NFC tag, reference may be made to the prior art, and details are not described herein.

### II. Payment application

An application is an application program installed on a terminal. A payment application is an application program that is installed on a terminal and that can perform a financial transaction. Before using the payment application to perform transaction processing, the terminal needs to confirm that a corresponding application program of the payment application has been installed on the terminal. The terminal accesses the application program of the payment application, and binds related bank card information to the payment application. In a process of binding the payment application and the bank card information, the terminal receives related bank account information entered by a user. To ensure security, the terminal interacts with a bank financial server to verify the account information, for example, to perform verification by using an SMS verification code. The terminal interconnects the payment application and a related UnionPay interface, so that during mobile shopping, the financial server may directly perform a payment operation in the payment application installed on the terminal.

### III. First message, information record, and account type.

The first message in this embodiment of the present invention is a message that is sent between the first terminal and the transaction peer end and that is displayed.

The first message may be transmitted by using a plurality of communications standards such as Bluetooth, Near Field Communication (Near Field Communication, NFC), ZigBee, infrared data transmission (Infrared Data Association, IrDA), and Wireless Fidelity (Wireless Fidelity, WiFi).

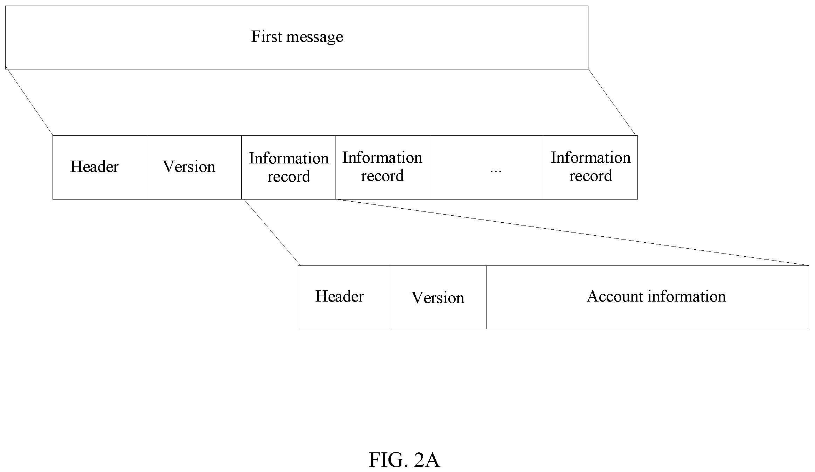

The first message exchanged between the first terminal and the transaction peer end may include a message header (for example, a record in NFC Data Exchange format, that is, an NDEF record), and may further include a version corresponding to a message protocol and at least one information record. The message header is used to describe basic information of the message such as a length and a type. Specifically, a message format of the first message is shown in FIG. 2A.

The information record is used to describe related information of an account that can be used for transaction. The information record carries account data and an account type, and there is one to one correspondence between account data and an account type in an information record.

It should be noted that an account type in an information record is a bank account type, a payment application account type, or a URL account type. In this embodiment of the present invention, an account type included in the information record stored in the terminal may be limited to any one of the foregoing three account types, a combination of any two foregoing account types, or a combination of the foregoing three account types.

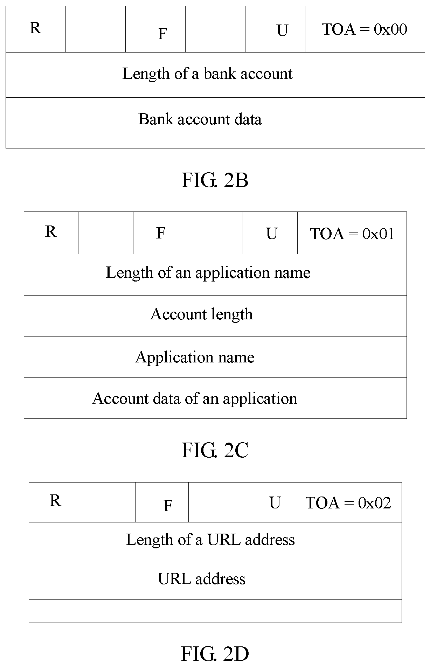

Specifically, a message body format of the information record includes a message header, a corresponding message protocol version, and account data, where the message header is used to describe basic information of the message such as a length and a type. When the account type included in the information record is a bank account type, a specific format of the information record is shown in FIG. 2B. When the account type included in the information record is a payment application account type, a specific format of the information record is shown in FIG. 2C. When the account type included in the information record is a URL account type, a specific format of the information record is shown in FIG. 2D. In specific implementation, the account type included in the message record occupies three bits (bit), and remaining bits may be used for extension. A TOA is used to represent an account type mark, and different values of the TOA indicate different corresponding account types. For details, refer to Table 1. Table 1 shows a correspondence between values of the TOA and account types. In Table 1, RFU is used to represent extensible bits and has no specific meaning.

**Table 1**

| **Account type (Type of Account) (3 bits)** | |
|---|---|
| 0x00 | Bank account type |
| 0x01 | Payment application account type |
| 0x02 | URL account type |
| 0x03-0xFF | RFU |

In some embodiments of the present invention, after receiving the first message from the transaction peer end, the first terminal may display message content of the first message on a display unit of the first terminal, for example, including the following information: an account type name and/or corresponding account data of each information record included in the first message.

The embodiments of the present invention relate to various technologies used for performing a transaction by using a terminal. The terminal is configured to perform various functions of the transaction, including: establishing an NFC connection to another terminal, so as to obtain information about at least one account that is provided by the another terminal and that includes account data and an account type; selecting an appropriate payment application based on the information about the at least one account; and performing a transaction by using the selected payment application.

It should be noted that the transaction between the first terminal and the transaction peer end may be a transfer transaction between individual users, a shopping transaction between a consumer and a merchant, or the like. In a scenario of a shopping transaction between a consumer and a merchant, the first terminal or the transaction peer end that represents the merchant may be a terminal such as a smartphone, a POS machine used for cash registering, or a personal computer (PC) or a tablet computer used by a consumer to browse a merchant's website during online shopping. Alternatively, the transaction peer end may be an NFC tag.

The following describes, based on a specific scenario, a process in which a charge payment user uses the first terminal and a charge receiving user uses the transaction peer end to perform a payment process during a transaction.

### Scenario 1:

The charge receiving user starts a second payment application at the transaction peer end, and the payment application at the transaction peer end generates a first message and sends the first message to the first terminal.

After the first terminal used by the charge payment user receives the first message, the charge payment user selects, based on an indication, one payment application in a plurality of candidate payment applications displayed on the display unit of the first terminal for transaction processing.

The transaction peer end is the terminal shown in FIG. 1, and an operation of selecting one payment application in a plurality of candidate payment applications by a charge payment user is optional.

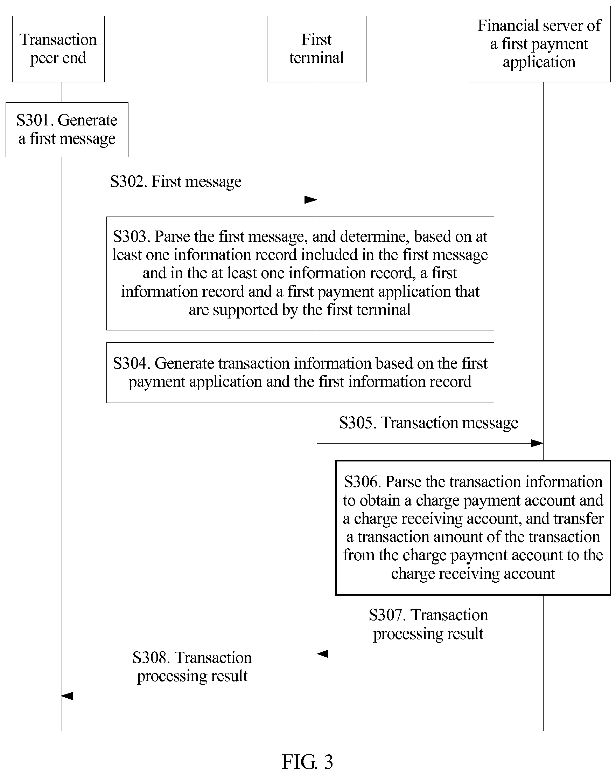

FIG. 3 is a flowchart of implementing a possible implementation provided for Scenario 1. As shown in FIG. 3, the procedure specifically includes the following steps.

S301. A transaction peer end generates a first message.

Optionally, a display panel of the transaction peer end displays an interface including an icon of a second payment application. A touch panel of the transaction peer end receives an operation of selecting the icon of the second payment application by a user. A processor of the transaction peer end starts the second payment application, invokes related setting information and service information of the second payment application that are stored in a memory, obtains at least one information record supporting the transaction, and carries the at least one information record in the first message.

In the first message, different account type marks are corresponding to different account types. A first account type mark is indicated by using 0x00, which represents a bank account type; a second account type mark is indicated by using 0x01, which represents a payment application account type; and a third account type mark is indicated by using 0x02, which represents a URL account type.

Optionally, when an account type in an information record is the bank account type, corresponding account data is a bank account; when the account type is the payment application account type, a corresponding information record further includes a payment application identifier, the payment application identifier is used to uniquely identify a specific payment application, and corresponding account data is a payment application account corresponding to the payment application identifier; and when the account type is the URL account type, corresponding account data is a URL address, and optionally, the information record further includes a second payment application identifier corresponding to the URL address of the account data.

It should be noted that in an implementation, the foregoing payment application account type is used to describe a specific type of any payment application. For example, accounts corresponding to a payment application A, a payment application B, and a payment application C are all of the payment application account type. In another implementation, the foregoing payment application account type is used to describe a type of a determined payment application. In this case, a payment application account type of a payment application is the same as a value of a corresponding payment application identifier.

Optionally, the first message may further include a transaction amount and/or a charge receiver mark, and the charge receiver mark herein is used to indicate that the transaction peer end is a charge receiver.

S302. The transaction peer end sends the first message to a first terminal.

Optionally, after generating the first message, the processor of the transaction peer end may send the generated first message to the first terminal by using an NFC module.

S303. The first terminal parses the first message, and determines, based on at least one information record included in the first message and in the at least one information record, a first information record and a first payment application that are supported by the first terminal.

Optionally, after receiving the first message, the first terminal sends the first message to the processor of the first terminal for processing, and the processor parses the first message. If it is determined that the first message includes only one information record, the information record is used as the first information record; or if it is determined that the first message includes at least two information records, the first information record is selected from the at least two information records, and the first payment application is determined based on an account type mark in the first information record. If the first payment application cannot be determined based on the first information record, the processor reselects the first information record from unprocessed information records, and performs a process of determining the first payment application until the first payment application supporting a transaction is determined. A specific implementation process is as follows:

It should be noted that when the processor of the first terminal selects the information record from the at least two information records, information records may be displayed on a display panel of the first terminal, and in this case, the information record may be selected based on a display order of information records on the first terminal, or one information record may be randomly selected from displayed information records. Optionally, when the processor of the first terminal selects the information record from the at least two information records, information records may not be displayed on the display panel of the first terminal, and in this case, the information record may be selected based on an arrangement order of information records included in the first message, or one information record may be randomly selected from information records included in the first message. A specific selection rule is not unique.

In a possible implementation, when detecting that a value of the account type mark in the first information record is the first account type mark, the processor of the first terminal obtains at least one payment application that is of the first terminal and that supports use of a bank account for transaction, uses the at least one payment application as the at least one candidate payment application, and determines the first payment application from the at least one candidate payment application according to a preset payment application selection rule.

The determining the first payment application from the at least one candidate payment application according to a preset payment application selection rule includes the following manners:

Manner 1: The processor of the first terminal obtains a transaction amount, and selects the first payment application when the transaction amount is within a first amount range, where the first payment application is a candidate payment application corresponding to the first amount range, one transaction amount range is corresponding to one payment application, and the transaction amount may be carried in the first message, or may be obtained by receiving an input of the user by using the touch panel.

Optionally, the touch panel of the first terminal receives the input of the user, and sets a transaction amount range for each payment application pre-installed on the first terminal. The processor determines the first payment application based on an amount range of the transaction amount. For example, it is set that when the transaction amount is less than 200 yuan, the payment application A is selected as the first payment application, or when the transaction amount is greater than or equal to 200 yuan, the payment application B is selected as the first payment application. Different transaction amount ranges may be corresponding to a same candidate payment application. For example, the transaction amount range is divided into three intervals: X <= 100, 100 < X <= 1000, and 1000 < X. It may be set that the payment application A is selected as the first payment application in the first amount range and the third amount range, and the payment application B is selected as the first payment application in the second amount range.

Manner 2: The processor of the first terminal obtains a transaction time, and selects the first payment application when the transaction time is within a first time range, where the first payment application is a candidate payment application corresponding to the first time range, and one transaction time range is corresponding to one payment application.

Optionally, the touch panel of the first terminal sets, based on time information entered by the user, a corresponding time range for each payment application pre-installed on the first terminal. The processor obtains the transaction time, and determines the first payment application based on a time range of the transaction time. For example, a payment application D is selected as the first payment application when the transaction time is within 7:00-18:00, and a payment application E is selected as the first payment application at another time. Different transaction time ranges may be corresponding to a same candidate payment application.

Manner 3: The processor of the first terminal obtains a transaction place, and selects the first payment application when the transaction place is within a first place range, where the first payment application is a candidate payment application corresponding to the first place range, and one transaction place range is corresponding to one payment application.

Optionally, the touch panel of the first terminal sets, based on place information entered by the user, a corresponding place range for each payment application pre-installed on the first terminal. The processor obtains the transaction place, and determines the first payment application based on a place range of the transaction place. For example, when the transaction place is located within 200 meters near a home address, the payment application E is selected as the first payment application; when the transaction place is located within 200 meters near a company address, a payment application F is selected as the first payment application; when the transaction place is in Beijing, a payment application G is selected as the first payment application; and when the transaction place is in Tokyo, the payment application F is selected as the first payment application. Different transaction time ranges may be corresponding to a same candidate payment application.

In a possible implementation, when detecting that a value of the account type mark in the first information record is the first account type mark, the processor of the first terminal obtains at least one payment application that is of the first terminal and that supports use of a bank account for transaction, and uses the at least one payment application as the at least one candidate payment application. The display panel of the first terminal presents information used for selecting one payment application in at least one candidate payment application, and receives, by using an input unit, an operation performed for the user to determine selection of the first payment application from the at least one candidate payment application. Optionally, the display panel of the first terminal may present the at least one candidate payment application based on a preset priority order of payment applications. A priority may be automatically set or be manually set by the user. Alternatively, a priority order may be based on a usage frequency of the users, that is, based on preferences of the users; for example, intelligent analysis is conducted for usage habits of the users.

In specific implementation, the processor queries registration information that is stored in the memory and that is generated when each payment application is installed on the first terminal, determines whether each payment application supports use of a bank account for transaction, and obtains at least one candidate payment application, where the registration information of the payment application includes transaction capability information that shows whether the payment application supports the bank account type. Alternatively, the processor obtains an information list from a cloud based on a preset information list, determines whether each payment application supports use of the bank account type for transaction, and obtains at least one candidate payment application, where the information list includes information that shows whether each payment application supports use of the bank account type for transaction.

In a possible implementation, when detecting that a value of the account type mark in the first information record is the second account type mark, the processor of the first terminal obtains a second payment application identifier in the first information record, and determines that an application that has a payment application identifier that is the same as the second payment application identifier and that has been installed on the first terminal as the first payment application.

In a possible implementation, when detecting that a value of the account type mark in the first information record is the third account type mark, the processor of the first terminal obtains at least one browser that is installed on the first terminal as the candidate payment application. Specifically, a method for determining the first payment application may be: displaying an interface of a selected browser for the user by using a preset default browser or by using a display panel, and using the browser selected by the user as the first payment application after an operation of determining performed by the user for the selected browser. Alternatively, the processor obtains the second payment application identifier in the first information record, and determines a payment application that has been installed on the first terminal and that has a payment application identifier that is the same as the second payment application identifier as the first payment application.

In a possible implementation, when the processor of the first terminal cannot determine the first payment application by performing the foregoing process, the processor of the first terminal displays, for the user by using the display panel, prompt information that the transaction cannot be performed, or the first terminal sends transaction failure information to the transaction peer end.

S304. The first terminal generates transaction information based on the first payment application and the first information record.

Optionally, the processor of the first terminal obtains account data in the first information record and uses the account data as first account data, obtains account data corresponding to the first payment application and uses the account data as second account data, and generates the transaction information.

In a possible implementation, the transaction message includes the second account data, the first account data, and a transaction amount.

Optionally, when the account type mark in the first information record is a first type mark, the transaction information includes information such as the first account data, the second account data, and the transaction amount. In this case, the first account data is a charge receiving account, and the second account data is a charge payment account. In this case, the processor of the first terminal starts the first payment application, and invokes different application programming interfaces (Application Programming Interface, API) based on different account type marks for transaction processing.

For example, when the account type mark in the first information record is a second type mark, the transaction information includes information such as the account type, the first account data, the second account data, and the transaction amount. In this case, the first account data is a charge receiving account, and the second account data is a charge payment account. In this case, a financial server corresponding to the first payment application performs corresponding transaction processing based on the account type mark.

In a possible implementation, the transaction information includes only the second account data and the transaction amount. The second account data is the charge payment account. In this case, the charge receiving account has been determined in advance. Optionally, the charge receiving account is obtained from a remote server during transaction processing.

For example, when the account type mark in the first information record is a third type mark, the transaction information includes information such as the second account data and the transaction amount. The transaction amount information is provided in the first message or is obtained after the first terminal receives an input. In this case, the second account data is the charge payment account, and the charge receiving account may be obtained from the remote server.

In a possible implementation, the transaction message further includes a charge receiving account mark and a charge payment account mark, where the charge receiving account mark is used to indicate that corresponding account data is the charge receiving account, and the charge payment account mark is used to indicate that the corresponding account data is the charge payment account. Alternatively, the charge receiving account and the charge payment account are determined based on a sequence of account data. For example, account data corresponding to the charge receiving account is located before account data corresponding to the charge payment account, or the account data corresponding to the charge payment account is located before the account data corresponding to the charge receiving account.

In a possible implementation, when the first payment application is a browser, the processor requests, by using an RF circuit or a WiFi module, content of a web page of an address that is identified by a URL address in the first information record, and opens a corresponding URL page. Optionally, the processor invokes a payment application on the first terminal based on information fed back by the open URL page, obtains account data corresponding to the payment application, and uses the account data as the first account data; for example, the processor receives account data and password information that are entered by the user and that are corresponding to the payment application. Alternatively, the processor directly invokes a related plug-in corresponding to the payment application, to obtain the account data corresponding to the payment application.

It should be noted that in a possible implementation, the account data corresponding to the first payment application may be user information corresponding to the first payment application. For example, the account data may be a login account name of a client of the first payment application or login account information that is used to identify a client of the first payment application such as a mobile number, an email address, a bank card number, or a trusted hardware identification number (for example, information used to identify terminal hardware); may be an encrypted alias, for example, a digital token that is used once or a plurality of times; or may be transaction information that is generated locally or on a server after the user selects, on a client on which the first payment application is installed, a transfer function in a two-dimensional code manner, a bar code manner, a sound wave manner, or the like, such as information included in a two-dimensional code or a bar code that is used for charge receiving or charge payment or information included in a sound wave that is used for charge receiving or charge payment. Encryption may be performed locally or on the server provided that the financial server corresponding to the first payment application can identify information corresponding to an account.

S305. The first terminal sends the generated transaction information to a financial server corresponding to the first payment application for transaction processing.

Optionally, the processor of the first terminal sends, by using the RF circuit or the WiFi module, the transaction message to the financial server corresponding to the first payment application, so that the financial server performs transaction settlement processing based on the transaction information.

S306. The financial server corresponding to the first payment application parses the transaction information to obtain a charge payment account and a charge receiving account, and transfers a transaction amount of the transaction from the charge payment account to the charge receiving account.

S307. The financial server corresponding to the first payment application sends a transaction processing result to the first terminal.

S308. The financial server corresponding to the first payment application sends the transaction processing result to the transaction peer end. An execution sequence of S307 and S308 is not limited. S307 may be performed first, or S308 may be performed first, or S307 and S308 are performed at the same time.

In a possible implementation, if the transaction fails because of an insufficient balance, a restricted permission, or the like, the financial server corresponding to the first payment application sends a transaction failure message to the first terminal and the transaction peer end.

The following describes, based on a specific scenario, a process in which the charge receiving user uses the first terminal and the charge payment user uses the transaction peer end to perform a payment process during a transaction.

### Scenario 2:

The charge payment user starts the second payment application at the transaction peer end, and the second payment application at the transaction peer end generates a first message and sends the first message to the first terminal.

After the first terminal used by the charge receiving user receives the first message, the charge receiving user selects, based on an indication, one payment application in a plurality of candidate payment applications displayed on the display unit of the first terminal for transaction processing.

The transaction peer end is the terminal shown in FIG. 1, and an operation of selecting one payment application in a plurality of candidate payment applications by the charge receiving user is optional.

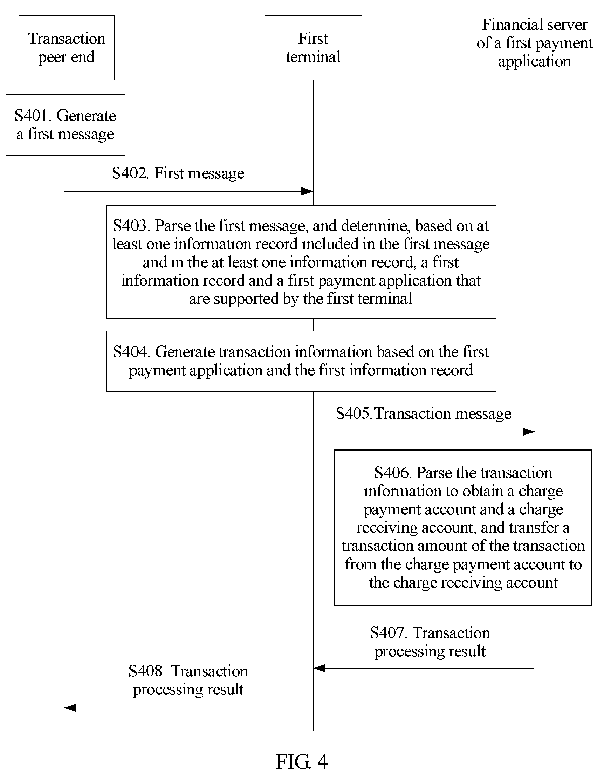

FIG. 4 is a flowchart of implementing a possible implementation provided for Scenario 2. As shown in FIG. 4, repeated descriptions between this implementation and the implementation shown in FIG. 3 are not provided again. Different from FIG. 3, the first account data in the transaction information is the charge payment account, and the second account data is the charge receiving account.

### Scenario 3:

The charge receiving user presets and stores the first message at the transaction peer end.

The charge payment user uses the first terminal to send, to the transaction peer end, a related instruction for reading the first message, so as to read the first message; and the charge receiving user selects, based on an indication, one payment application in a plurality of candidate payment applications displayed on the display unit of the first terminal for transaction processing.

The transaction peer end is an NFC tag, and an operation of selecting one payment application in a plurality of candidate payment applications by the charge payment user is optional.

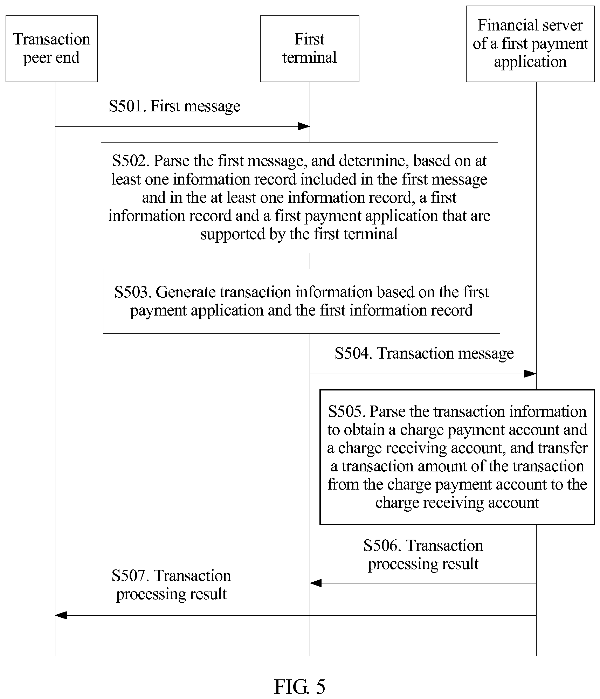

FIG. 5 is a flowchart of implementing a possible implementation provided for Scenario 3. As shown in FIG. 5, repeated descriptions between this implementation and the implementation shown in FIG. 3 are not provided again. Different from FIG. 3, S301 does not need to be performed. The first message is pre-stored at the transaction peer end, and in a subsequent transaction, the first terminal directly establishes an NFC connection to the transaction peer end to obtain the first message and perform a subsequent procedure. For example, in a supermarket, a cashier stores the first message in an NFC tag, and places the NFC tag on a counter, so that a user can subsequently directly place a first terminal close to the NFC tag, so as to read the NFC tag to obtain the first message and complete a transaction.

Based on the foregoing embodiments, an embodiment of the present invention further provides a terminal with a transaction application selection function. For hardware implementation of the terminal, refer to FIG. 1 and related descriptions.

An NFC module 100 is configured to: establish a Near Field Communication NFC connection to another terminal, and receive, by using the NFC connection, a first message sent by the another terminal, where the first message includes at least one information record of the another terminal, and the information record includes account data and an account type; and
a processor 180 is configured to: determine, based on the account type included in the at least one information record, a first information record from the at least one information record, and determine to use a first payment application to perform transaction processing based on account data in the first information record, where the first payment application is a payment application on the terminal.

Optionally, the account type is a bank account type, a payment application account type, or a uniform resource locator URL account type.

Optionally, the account type is the bank account type, and the account data is a bank account.

Optionally, the account type is the payment application account type, the information record further includes a payment application identifier, and the account data is a payment application account corresponding to the payment application identifier.

Optionally, the account type is the URL account type, and the account data is a URL address.

Optionally, the processor 180 is specifically configured to:
select an information record from the at least one information record; and
determine that at least one candidate payment application supports use of an account type in the selected information record for transaction, determine the first payment application from the at least one candidate payment application according to a preset payment application selection rule or a received user selection, and use the selected information record as the first information record.

Optionally, the processor 180 is further configured to:
obtain any one of a transaction amount, a transaction time, and a transaction place; and
the determining the first payment application from the at least one candidate payment application according to a preset payment application selection rule includes:
   selecting the first payment application when the transaction amount is within a first amount range, where the first payment application is a candidate payment application corresponding to the first amount range; or
   selecting the first payment application when the transaction time is within a first time range, where the first payment application is a candidate payment application corresponding to the first time range; or
   selecting the first payment application when the transaction place is within a first place range, where the first payment application is a candidate payment application corresponding to the first place range.

Optionally, the processor 180 is specifically configured to:
when it is determined that the account type in the selected information record is a bank account type, obtain at least one payment application that is of the terminal and that supports use of the bank account type for transaction, and use the at least one payment application as the at least one candidate payment application; or
when it is determined that the account type in the selected information record is a payment application account type, obtain the payment application identifier in the selected information record, and use a payment application that is on the terminal and that is corresponding to the payment application identifier as the at least one candidate payment application; or
when it is determined that the account type in the selected information record is a URL account, use at least one browser on the terminal as the at least one candidate payment application.

Optionally, the processor 180 is specifically configured to:
send a transaction message to a financial server of the first payment application by using a wireless communications module of the terminal, so that the financial server performs transaction settlement processing based on the transaction message, where the transaction message includes second account data, first account data, and a transaction amount, the first account data is the account data in the first information record, and the second account data is account data corresponding to the first payment application. The wireless communications module may be an RF circuit 110 or a WiFi module 170.

Optionally, the first account data is a charge payment account, and the second account data is a charge receiving account; or the first account data is a charge receiving account, and the second account data is a charge payment account.

Optionally, an input unit 130 is configured to receive a transaction amount entered by a user.

The processor 180 is further configured to obtain the transaction amount from the first message.

For another possible implementation of the terminal, refer to a processing process of the first terminal in a procedure shown in FIG. 2-FIG. 4.

Based on the foregoing embodiments, an embodiment of the present invention further provides a terminal with a transaction application selection function. For hardware implementation of the terminal, refer to FIG. 1 and related descriptions.

An NFC module 100 is configured to establish a Near Field Communication NFC connection to another terminal;
a processor 180 is configured to generate a first message, where the first message includes at least one information record of the terminal, and the information record includes account data and an account type; and
the NFC module 100 is further configured to send the first message to the another terminal by using the NFC connection, so that the another terminal selects a payment application based on the first message.

Optionally, the information record further includes a transaction amount.

For another possible implementation of the terminal, refer to a processing process of the transaction peer end in a procedure shown in FIG. 2-FIG. 4.

In conclusion, in this embodiment of the present invention, the first terminal establishes the NFC connection to the transaction peer end; the first terminal receives, by using the NFC connection, a first message sent by the transaction peer end, where the first message includes at least one information record of the transaction peer end, and the information record includes the account data and the account type; and the first terminal determines, based on the account type included in the at least one information record, a first information record from the at least one information record, and determines to use a first payment application to perform transaction processing based on account data in the first information record, where the first payment application is a payment application on the first terminal. In this way, the first terminal can determine, based on the first message that is provided by the transaction peer end for transaction, the first information record and the first payment application of the first terminal for transaction, so as to improve transaction processing efficiency.

A person of ordinary skill in the art may understand that all or some of the steps in each of the foregoing method of the embodiments may be implemented by a program instructing a processor. The foregoing program may be stored in a computer readable storage medium. The storage medium may be a non-transitory (English: non-transitory) medium, such as a random-access memory, read-only memory, a flash memory, a hard disk, a solid state drive, a magnetic tape (English: magnetic tape), a floppy disk (English: floppy disk), an optical disc (English: optical disc), or any combination thereof.

The present invention is described with reference to the flowcharts and/or block diagrams of the method and the device according to the embodiments of the present invention. It should be understood that computer program instructions may be used to implement each process or each block in the flowcharts and the block diagrams and a combination of a process and a block in the flowcharts and the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and in one or more blocks in the block diagrams.

The foregoing descriptions are merely examples of embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A transaction application selection method, comprising:
establishing, by a first terminal, a Near Field Communication NFC connection to a transaction peer end;
receiving, by the first terminal by using the NFC connection, a first message sent by the transaction peer end, wherein the first message comprises at least one information record of the transaction peer end, and the information record comprises account data and an account type; and
determining, by the first terminal based on the account type comprised in the at least one information record, a first information record from the at least one information record, and determining to use a first payment application to perform transaction processing based on account data in the first information record, wherein the first payment application is a payment application on the first terminal.

2. The method according to claim 1, wherein the account type is a bank account type, a payment application account type, or a uniform resource locator URL account type.

3. The method according to claim 2, wherein the account type is the bank account type, and the account data is a bank account.

4. The method according to claim 2, wherein the account type is the payment application account type, the information record further comprises a payment application identifier, and the account data is a payment application account corresponding to the payment application identifier.

5. The method according to claim 2, wherein the account type is the URL account type, and the account data is a URL address.

6. The method according to claim 1 or 2, wherein the determining, by the first terminal based on the account type comprised in the at least one information record, a first information record from the at least one information record, and determining to use a first payment application to perform transaction processing based on account data in the first information record comprises:
selecting, by the first terminal, an information record from the at least one information record; and
determining, by the first terminal, that at least one candidate payment application supports use of an account type in the selected information record for transaction, and determining, by the first terminal, the first payment application from the at least one candidate payment application according to a preset payment application selection rule or a received user selection, and using the selected information record as the first information record.

7. The method according to claim 6, wherein the determining, by the first terminal, the first payment application from the at least one candidate payment application according to a preset payment application selection rule comprises:
obtaining, by the first terminal, any one of a transaction amount, a transaction time, and a transaction place; and
the determining, by the first terminal, the first payment application from the at least one candidate payment application according to a preset payment application selection rule comprises:
selecting, by the first terminal, the first payment application when the transaction amount is within a first amount range, wherein the first payment application is a candidate payment application corresponding to the first amount range; or
selecting, by the first terminal, the first payment application when the transaction time is within a first time range, wherein the first payment application is a candidate payment application corresponding to the first time range; or
selecting, by the first terminal, the first payment application when the transaction place is within a first place range, wherein the first payment application is a candidate payment application corresponding to the first place range.

8. The method according to claim 6, wherein the determining, by the first terminal, that at least one candidate payment application supports use of an account type in the selected information record for transaction comprises:
when the first terminal determines that the account type in the selected information record is a bank account type, obtaining at least one payment application that is of the first terminal and that supports use of the bank account type for transaction, and using the at least one payment application as the at least one candidate payment application; or
when the first terminal determines that the account type in the selected information record is a payment application account type, obtaining the payment application identifier in the selected information record, and using a payment application that is on the first terminal and that is corresponding to the payment application identifier as the at least one candidate payment application; or
when the first terminal determines that the account type in the selected information record is a URL account, using at least one browser on the first terminal as the at least one candidate payment application.

9. The method according to any one of claims 1 to 8, wherein the determining, by the first terminal, to use a first payment application to perform transaction processing based on account data in the first information record specifically comprises:
sending, by the first terminal, a transaction message to a server, so that the server performs transaction settlement processing based on the transaction message, wherein the transaction message comprises second account data, first account data, and a transaction amount, the first account data is the account data in the first information record, and the second account data is account data corresponding to the first payment application.

10. The method according to claim 9, comprising:
the first account data is a charge payment account, and the second account data is a charge receiving account; or
the first account data is a charge receiving account, and the second account data is a charge payment account.

11. The method according to claim 9, wherein the method further comprises:
obtaining, by the first terminal, the transaction amount from the first message; or
receiving, by the first terminal, a transaction amount entered by the user.

12. A transaction application selection method, comprising:
establishing, by a transaction peer end, a Near Field Communication NFC connection to a first terminal;
obtaining, by the transaction peer end, a first message, wherein the first message comprises at least one information record of the transaction peer end, and the information record comprises account data and an account type; and
sending, by the transaction peer end, the first message to the first terminal by using the NFC connection, so that the first terminal selects a payment application based on the first message.

13. The method according to claim 12, wherein the information record further comprises a transaction amount.

14. A terminal, comprising:
an NFC module, configured to: establish a Near Field Communication NFC connection to another terminal, and receive, by using the NFC connection, a first message sent by the another terminal, wherein the first message comprises at least one information record of the another terminal, and the information record comprises account data and an account type; and
a processor, configured to: determine, based on the account type comprised in the at least one information record, a first information record from the at least one information record, and determine to use a first payment application to perform transaction processing based on account data in the first information record, wherein the first payment application is a payment application on the terminal.

15. The terminal according to claim 14, wherein the account type is a bank account type, a payment application account type, or a uniform resource locator URL account type.

16. The terminal according to claim 15, wherein the account type is the bank account type, and the account data is a bank account.

17. The terminal according to claim 15, wherein the account type is the payment application account type, the information record further comprises a payment application identifier, and the account data is a payment application account corresponding to the payment application identifier.

18. The terminal according to claim 15, wherein the account type is the URL account type, and the account data is a URL address.

19. The terminal according to claim 14 or 15, wherein the processor is specifically configured to:
select an information record from the at least one information record; and
determine that at least one candidate payment application supports use of an account type in the selected information record for transaction, determine the first payment application from the at least one candidate payment application according to a preset payment application selection rule or a received user selection, and use the selected information record as the first information record.

20. The terminal according to claim 19, wherein the processor is further configured to:
obtain any one of a transaction amount, a transaction time, and a transaction place; and
the determining the first payment application from the at least one candidate payment application according to a preset payment application selection rule comprises:
selecting the first payment application when the transaction amount is within a first amount range, wherein the first payment application is a candidate payment application corresponding to the first amount range; or
selecting the first payment application when the transaction time is within a first time range, wherein the first payment application is a candidate payment application corresponding to the first time range; or
selecting the first payment application when the transaction place is within a first place range, wherein the first payment application is a candidate payment application corresponding to the first place range.

21. The terminal according to claim 19, wherein the processor is specifically configured to:
when it is determined that the account type in the selected information record is a bank account type, obtain at least one payment application that is of the terminal and that supports use of the bank account type for transaction, and use the at least one payment application as the at least one candidate payment application; or
when it is determined that the account type in the selected information record is a payment application account type, obtain the payment application identifier in the selected information record, and use a payment application that is on the terminal and that is corresponding to the payment application identifier as the at least one candidate payment application; or
when it is determined that the account type in the selected information record is a URL account, use at least one browser on the terminal as the at least one candidate payment application.

22. The terminal according to any one of claims 14 to 21, wherein the processor is specifically configured to:
send a transaction message to a financial server of the first payment application by using a wireless communications module of the terminal, so that the financial server performs transaction settlement processing based on the transaction message, wherein the transaction message comprises second account data, first account data, and a transaction amount, the first account data is the account data in the first information record, and the second account data is account data corresponding to the first payment application.

23. The terminal according to claim 22, comprising:
the first account data is a charge payment account, and the second account data is a charge receiving account; or
the first account data is a charge receiving account, and the second account data is a charge payment account.

24. The terminal according to claim 22, wherein the terminal further comprises an input unit, configured to receive a transaction amount entered by the user; and
the processor is further configured to obtain the transaction amount from the first message.

25. A terminal, comprising:
an NFC module, configured to establish a Near Field Communication NFC connection to another terminal; and
a processor, configured to obtain a first message, wherein the first message comprises at least one information record of the terminal, and the information record comprises account data and an account type; wherein
the NFC module is further configured to send the first message to the another terminal by using the NFC connection, so that the another terminal selects a payment application based on the first message.

26. The terminal according to claim 25, wherein the information record further comprises a transaction amount.
